# EUROPEAN PATENT SPECIFICATION

(11) **EP 0 788 860 B1**
(45) Date of publication and mention of the grant of the patent: **10.04.2002**
(21) Application number: 96109398.6
(22) Date of filing: 12.06.1996
(51) Int. Cl.: B23P 15/26, F25B 39/02, B23K 1/00, B23K 3/06, B23K 1/08

(54) **Heat exchange assembly and relative process and production plant**
Wärmetauscheranordnung und entsprechendes Verfahren sowie Herstellungsanlage
Ensemble d'échange de chaleur, et procédé d'installation de fabrication relatif

(30) Priority: 07.02.1996 IT UD960013
(43) Date of publication of application: 13.08.1997
(73) Proprietor: C.G.A. COMPAGNIA GENERALE ALLUMINIO S.p.A., I-33043 Cividale del Friuli (IT)
(72) Inventor: Nocivelli, Gianfranco, 33043 Cividale del Friuli (UD) (IT)
(74) Representative: D'Agostini, Giovanni, Dr.

(56) References cited:
- DE-A- 1 904 245
- US-A- 3 760 481
- US-A- 3 833 986
- US-A- 3 920 176
- US-A- 4 600 137
- US-A- 5 101 889
- US-A- 5 269 158

## Description

The present invention has for object an evaporator heat exchange assembly and relative process and production plant.

The invention finds particular application in the industrial and domestic refrigerators that use the evaporators and their component parts.

In prior art it is known that the main component of the freezing circuit refrigerator is the evaporator, that is a part of the circuit in which the cooling fluid (Eg. freon, iso-butane R600, R134A, and other equivalent fluids) expands. The freezing fluid is first compressed by a compressor and after having passed through an external heat exchanger acting as condenser, it is sent into said evaporator by a capillary tube.

The capillary tube generally conveys the compressed cooling fluid practically in a liquid form to the evaporator. This fluid, coming out free in the evaporator expands and becomes gaseous subtracting calories and therefore cooling the surrounding area.

This is due to the known law of fluid mechanics PV=RT=constant, where P indicates the pressure of the fluid, V indicates its volume, T indicates the absolute temperature =-273 C° and R is a constant.

On the base of the aforementioned formula it is therefore known that for reducing the pressure the volume must be increased or viceversa, that is said compressed cooling fluid that comes out from the capillary tubule must be let free to expand and in this way the cooling is obtained.

This expansion takes place on the inside of a duct made in said evaporator whose name comes from the fact that when the cooling fluid is compressed in the capillary it is substantially liquid and when comes out of it, because of its free expansion, vaporizes immediately and expands subtracting heat to the evaporator walls that for such reason cool the surrounding environment of the refrigerating box.

The cooling fluid circulates therefore freely in the evaporator and then is re-sucked by the compressor by means of a return duct .

By means of the compressor, that is external to the refrigerator box, the gaseous cooling fluid is compressed again.

The compression involves a considerable increase of the cooling fluid temperature, wherefore it is forced to pass by previous passing to a finned coil tubular condenser, placed on the outside of the refrigerating box, generally on the back side of the refrigerator.

The finned condenser yields heat to the environment air and cools, the cooling causes the condensation of the compressed gas, making it liquefy, for such reason this external heat exchanger is called condenser.

The compressed liquid cooling fluid, then passes into a tubule having very short diameter that is called capillary tube, which as mentioned debouches into the evaporator.

The cycle is repeated with closed circuit and the cooling continues.

For reducing the costs of the cooling circuit, it is generally used a single coaxial duct, that is:
A return tube of the cooling fluid in gaseous form from the evaporator (which has an internal diameter substantially wider than the external diameter of said capillary tube), and
said capillary tube (having a very small diameter if compared to the first one), coming directly from the condenser, that is internally connected into the return tube and the assembly is sent to the evaporator which is placed inside the refrigerator box.

The reasons for including said capillary tube, within the return tube, are thus suggested:
- both for efficiency reasons for furtherly cooling the capillary with the return cooling fluid coming still cold from the evaporator;
- and for economy technological constructive reasons as with such system only one tube must be welded to the evaporator.

For obtaining this result though it is necessary to obtain an absolutely airtight closed circuit, not in contact with the air and without leaks, wherefore, the evaporator has a circuit also closed only on one single mouth as a collector, where it is directly "Y" branched with an outward duct, generally rectilinear respect to the mouth shaped as collector coupling sleeve, and a return duct, generally at 90 degrees respect to the first one and in proximity of said mouth, where it will be fitted and will be provided for the welding of the coaxial pipe that leads to the condenser and compressor.

The welding of said coaxial tube takes place so that:
the external return tube is immediately welded at the entry, within the respective mouth collector coupling sleeve, allowing the free connection with the evaporator return duct, while
the capillary tubule extends over said return duct until it connects into said evaporator outward duct.

Between the outside of the capillary tubule and the inside of the outward duct there must be no communication, otherwise the closed circuit would not be obtained, wherefore the connection is carried out in the following phases:
. the part around the end of the capillary tube must be filled with a sealing paste;
. the return tube must be engaged with the respective projecting capillary tube, within the mouth in the coupling sleeve of the evaporator collector, so that the paste of the capillary end goes to obstruct the part around the delivery branch;
. a first section of the outward branch of the evaporator must be caulked, that is it must be squeezed so that this squeezing, together with said sealing paste, obstructs completely the aback opening of the external part of said capillary tube (in this way the capillary tube will directly debouche only into the outward duct of the evaporator and the cooling fluid will be able to expand only within said outward duct as evaporation duct).

The cooling fluid is forced to flow along all the circuit provided in the evaporator (circuit that provides a considerable volume increase) and will return back after having flown through all the circuit of the evaporator, through the return duct annularly entering on the outside of said capillary tubule and on the inside of said return tube.

The outside of said return tube must be welded on said coupling sleeve of the collector mouth duct, by braze welding or by weld material in inert gas (system T.I.G.), in order to have a perfect sealing.

Advantageously, the evaporator is made:

Long ago by a welding which joined two aluminium sheets having an alloy sheet interposed and subjected to temperature; at least one of those sheets was pre-shaped for supplying between each other the wished freezing circuit for the cooling fluid evaporation .

In the prior art, the evaporator plate is made by coupling, by means of a rolling process, two or more layers of aluminium alloy strips according to the "Roll Bond" technique. Correspondingly to the internal surfaces of the layers it is obtained, by silk-screen processing, the circuit that will receive the refrigerating fluid and that, practically, represents in the rolling phase a solution of continuity among the layers allowing their detachment at the desired height, by means of a following inflating action.

As said, the piping of the freezing circuit is an assembly of a connecting tube between the evaporator and the rest of the refrigerating circuit and may be made in aluminium and copper with a bimetallic junction of the traditional type (resistance or flash made) and a coaxial capillary that acts as rolling valve for the cooling fluid.

The above mentioned operation is extremely complex and expensive.

In particular it was noticed that complexity and costs are substantially due to the last brazing or welding phase where weld material in inert environment is used.

In fact due to the complexity of the system, this welding operation cannot be carried out mechanically or automatically, but only manually, and in particular it is not even possible a low cost robotization.

The cause thereof is due to the continuous changing of evaporator shapes and of the coupling positions of the freezing circuit coaxial tube.

At the beginning were used brazing systems which used an alloy with very high silver content (therefore extremely expensive) with a manual quill traditional system.

This technique of using silver alloys was required:
- both for the need of maintaining the brazing temperature low;
- and for making possible a maximum penetration for the capillarity principle, of the melted alloy in the interstice or interspace between the outside of the return tube and the mouth collector coupling sleeve of the evaporator.

When expensive high quality alloys in silver, copper, zinc, and other metals were not used, the results obtained from the welding were poor:
both for the need of increasing the welding temperature with an easy deoxidant evaporation and therefore an easy formation of aluminium oxide that as a matter of fact prevented the welding of metals;
and for the alloy reduced fluidity.

Nowadays it is generally used an electric arc welding with tungsten electrodes and inert gas weld material known as T.I.G. system (Tungsten Inert Gas).

But also this solution has high qualitative limits, particularly for its manuality that involves changes and therefore a defective welding risk, for example in the oxidation of the surfaces to be welded or in the incomplete accuracy during the welding process.

These operations, must be carried out manually by a single operator, and this prevents a mechanization at acceptable costs.

The system is also dangerous because it forces the operator to work in presence of electromagnetic waves and in a toxic environment, wherefore requires the use of screening elements and the presence of suitable ventilation and suction systems.

A further problem derives additionally from that, as it is known, the welding areas, have always chemical-physical-mechanical characteristics different if compared to the two welded elements.

In fact the welding areas are known
as possible areas for corrosions and crackings This is taught not only by technique but also and above all by experience. See for example the technique of the aeronautical constructions where nowadays riveting is still used for joining the light alloy elements (metal-sheets) in place of welding.

This is obvious particularly in the case of continuous dynamic stresses, that can exactly cause cracks and fissures which bring to a final breakage.

Now it is known that even if indirectly also said coaxial tube is subjected to continuous vibrations exerted by the compressor, that somehow are transmitted, even if reduced, also to the welding area and to the evaporator, with breakage risks in the long run.

Laboratory tests in such field have widely demonstrated what stated above.

The weldings must be made with great accuracy and the welding area must be very enlarged with a considerable amount of weld material, this involves not only a material consumption beyond what is strictly necessary for the welding itself, but also a worsening of the aesthetic aspect.

Also the eventual external cleaning of the same welding is expensive.

### Purpose of the present invention

The purpose of this invention is to avoid the above-mentioned drawbacks and make possible:
not only the full mechanizing of the evaporators production, getting over the manual welding problems explained above,
but also the supplying of a product with better qualities and
performance, that is regarding the whole product or at least the area that involves said welding;
and this with possibly lower costs.

Ultrasonic welding in Zinc molten solder for producing finned tubing serpentine exchangers is known.

US-3833986 A (DECICCO), discloses a method of making fluid-tight telescopic joints in serpentine aluminum tubing for heat exchangers with a plurality of relative long U-shaped aluminum tubing sections for supporting aluminum fins stacked in spaced relation thereon and a plurality of short U-shaped aluminum tubing sections each having opposite ends adapted to telescopically fit in the ends of the long sections of tubing to connect adjacent ends of the long sections, including the steps of providing an aperture in at least one of the long tubing sections for venting the tubing during soldering, assembling the short tubing sections with the ends thereof, telescopically positioned in the ends of the long tubing sections and spaced therefrom to permit the flow of solder into the telescopic joints, dipping the assembly in the fluid solder to immerse the short tubing sections and the lower ends of the upper tubing sections to a depth just below the upper ends of the lower tubing sections to flow solder into the telescopic joints while venting the tubing through the aperture in the long tubing section, introducing ultrasonic vibrations into the solder while the assembly is dipped, and closing the aperture in the long tubing section by brazing.

US-3760481A (GREEVER), discloses a similar method for joining finned tubing with short U-tubing sections, wherein the members are withdrawn from the molten solder, in order to allow the solder to solidify to form a permanent joint.

A molten Zinc solder bath is used and subjected to ultrasonic energy by ultrasonic transducer.

US-5101889A (POTTER), discloses similar U-bent serpentine heat exchangers using a similar molten bath welding.

US-3920176A (BECKER ET AL), further discloses a method of soldering of finned tubing as per the above characteristics.

### Further purpose of the invention

Purpose of this invention is to transfer this technology to the production of evaporators which to date have not been considered.

In particular one of the main problems is the high pressure used in evaporators, the strong difference in the temperature existing from one zone to another of the evaporator circuit and in particular the very low temperature into the evaporator (eg. Freezer) that causes frequent cracking in welding zones.

For this reason this is not a simple technology transfer but the resolving of many problems in order to give good performance of the resulting evaporator.

### Summary of the invention

This and other purposes are reached and raised problems are solved, as claimed by means of an evaporator group of the type that uses a roll bond evaporator couple of plates, in aluminium or its alloy, and between said plates an evaporator duct is obtained by not bonding of said plates, to which it is connected in a corresponding junction area, a freezing circuit piping with metallic pipe return tube, having coaxially a capillary tube,
- said freezing circuit piping having a capillary tube further connection in said return tube, to allow said capillary tube to come out from inside said return tube,
characterised in that:
- both said junction area and capillary tube further connection have a coupling sleeve shape;
- male and/or female portions of said sleeve-coupling junctions are undulated in order to form some grooves in the connection area that allow penetration of the melted material,
- the entire piping with said capillary tube forming said freezing circuit piping and the surface of at least said junction area in said evaporator plate, is sealed and covered by a melted metal layer of 95% zinc and 5% aluminium alloy, made adherent by immersion bath;
- the interspace of said junction and connection in a coupling sleeve being sealed by penetration of the same melted metal that also coats the external area;
- said junction area is projecting respect to the edge of the said evaporator plate.

In this way the evaporator group (assembly) production system may be fully mechanized because said assembly can be conveyed in continuous advancing or pitch line, therefore in continuous cycle.

And the above mentioned occurring in a fully automatic way without need for operators, being the shape of the evaporator or the position or width or shape and number of the connections independent.

Furthermore, in this way in one single operation are provided all the weldings, also of more connections, simultaneously.

The costs are therefore sensitively reduced.

The resulting advantages are enormous and such to fully justify the very important technological innovation, that even using technologically widely known knowledges, is able to combine them in way up to now unthought with immediate consequences both on the qualitative production and cost and security having no more need for manpower.

In other words the metal bath replaces the necessity for welding or brazing, as the connections are closely blocked by melted metal penetration within them, which provides a similar and even better performance.

In fact said metallic bath, not only allows the metal to penetrate by capillarity among the male and female elements of the connections, but also forms an external protection superficial coating layer.

In fact it is known that in case of bi-metallic pipes (part of the pipe in aluminium and part in copper), are generated some galvanic currents that cause corrosion. The passivation therefore provides not only the advantage of the superficial protection against the wear but also a suitable protection against corrosion.

The evaporator then will be easily be subjected to further varnishing, with the advantage that at least in the welding area (or in all the evaporator if fully immerged in the metallic bath) will have a double protective layer against wear and oxidation-corrosion.

Advantageously the evaporator utilized and said return tube are in aluminium or aluminium alloy and said melted metal is a substantially zinc and aluminium alloy.

The alloy includes 95% Zinc more or less 5% and Aluminium giving both fluidity and compatibility at a low suitable temperature.

And the heating of the melted bath happens preferably on the inside of a distance between 420 and 460° C, where the alloy has an optimal fluidity.

In this way a very strong bond and penetration of the metal is obtained for blocking the male-female connectors junctions.

As much advantageously said evaporator group is preheated before of the immersion in said melted metal bath, to a temperature at least 10-15 °C higher respect to the bath temperature. In this way it is ensured a maximum penetration capillarity of the metal between said mouth collector coupling sleeve and the return tube.

As much advantageously, to avoid the danger of hindering the amalgamation of the melted metal with the internal surface of the mouth collector coupling sleeve and the external surface of said return tube, said melted metal is subjected to ultrasounds, so that the ultrasonic vibrations, favour the detachment of the oxide coating from the bathed surfaces, allowing a better close contact.

Advantageously the bath will have a vertical axial direction.

In this way there is not only the advantage of bathing the junction area that advantageously may be projecting, but there will also be the advantage of allowing the oxides present in the interspace junction of coupling sleeve and mouth collector of the return tube, to detach by floating or be pushed towards the above tube-beat annular bottom in the collector, favouring also an obstruction of said interspace and preventing the metal to pass on the inside of the outward and return ducts of the evaporator.

Furthermore the oxides that detach externally in the metallic bath can be skimmed because floating periodically from said bath, being thus able to fully utilize the melted metal with a minimum loss.

As by taking the evaporator group out of the bath it may occur a metal dripping that will cool on the surface leaving the spatter, this can be avoided by a suitable air jet.

These and other advantages will appear by the following description of a preferred embodiment solution with the help of the enclosed drawings whose details are not to be considered limitative but only supplied as an example.

Figure 1 is a view of the pre-assembled evaporator group .

Figure 2 is an enlarged partial section view of the junction area within said mouth coupling sleeve of the freezing circuit pipe with the evaporator.

Figure 3 is a schematic view of the possible mechanization of the evaporator group production plant, in the phase where the pipe of the freezing circuit is fixed in the evaporator plate, in which it is shown that both connections (pipe-pipe and pipe-evaporator) are immerged in the bath and therefore simultaneously sealed, that is welded by the melted bath.

Figure 4 represents again the junction area schematically enlarged.

Figure 5 is a schematic sectional view of the connection area in the pipe of the freezing circuit in correspondence of the branch with the capillary tube coming out.

Figure 6 represents a section schematic plan view of the connection of Fig.5.

Figure 7 represents a section schematic plan view of the connection of Fig.5, as variation of the solution of Fig.6, in the configuration of the return tube male end portion, by undulation that forms some grooves in the connection area that favour the penetration of the melted material (obviously said undulations or grooves could be alternatively made in the female part, that is in the external coupling sleeve).

With reference to the Figures it can be noticed that on 1 is shown the evaporator plate, which, as said is obtained by the junction of two metal-sheets shaped in order to form a single assembly (roll bond) with the evaporation circuit 1' that branches from a mouth collector coupling sleeve 12 which has an outgoing "A" and a return (R-1"') after full expansion in a large evaporation surface (1").

To the evaporator plate is connected in said mouth collector coupling sleeve said freezing circuit pipe that includes a return tube 3 and a capillary tubule 5 which is placed inside of the return tube 3, and projects from it, for proceeding within the evaporator delivery duct 1', where it is clamped by the caulking 11 of the outward duct that forms by means of a sealing paste a sealing around the capillary tube, allowing the outflow only in the outward duct.

The return tube 3 is fully fitted in said coupling sleeve 12 where it connects in close contact, allowing the outflow of the cooling fluid gas annularly outside of the capillary tube (5) and inside of the return tube 3.

At a certain distance in length of the return tube 3+ capillary tube 5 pipe, there is a welding knot, generally glass-like (4), where the two tubes are disjoined (3) and (5) to be, when assembled in the refrigerator box, brought externally to the refrigerating cell .

The evaporator plate is generally rectangular and is supplied flat or slightly pre-bent to the refrigerators industry to ease the complete bending.

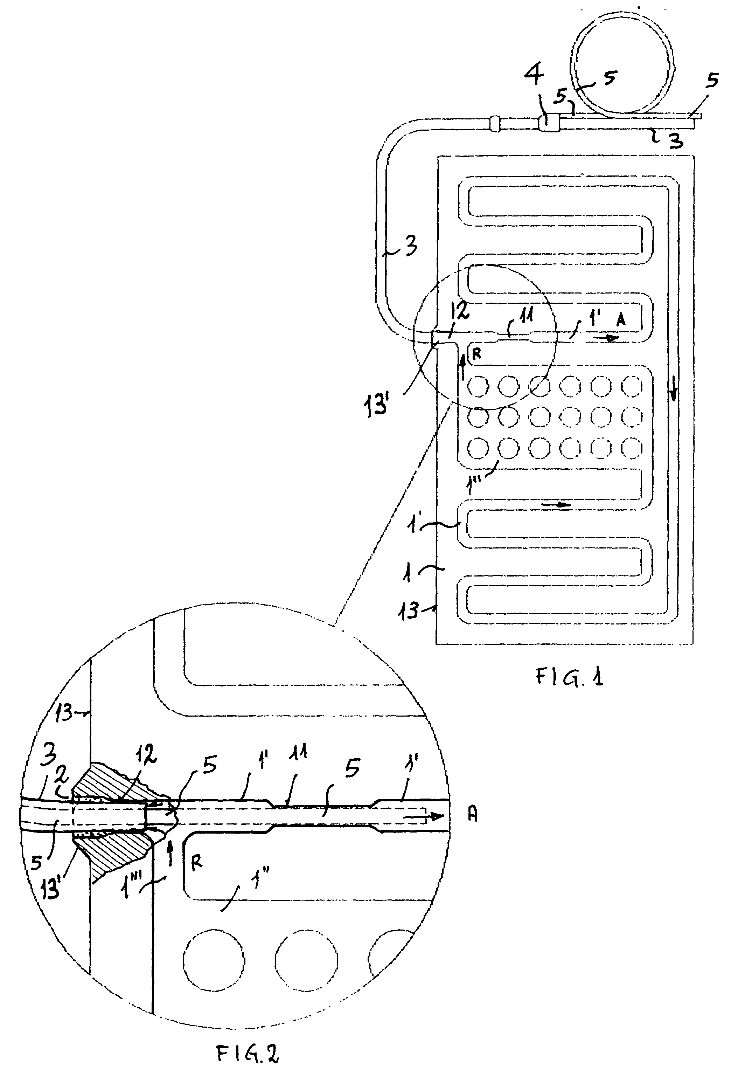

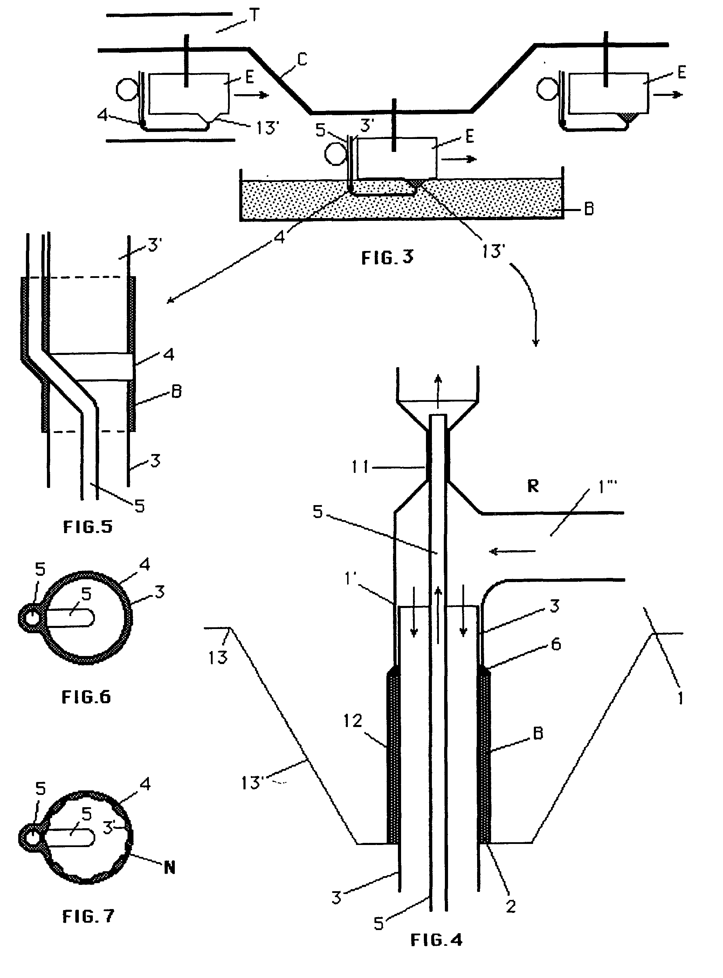

The pipe 3+5 welded to the evaporator is conveniently put alongside to the evaporator plate and the free capillary is rolled up, as clearly shown in figures 1 and 3.

This is obviously done for technical reasons of encumbrances reduction, in order to ease the moving and packing.

According to the invention, on a continuous conveyor "C" are hung the pre-assembled evaporator groups E (1+3+5) as from Fig.1.

These evaporators are first forced to pass in a pre-heating station (for example heating tunnel "T") where is preheated the junction area 13' that suitably projects respect to the lower board of the evaporator plate 13.

The heating takes place at a temperature at least 10-15° higher if compared to the Aluminium-zinc metallic alloy bath (B).

After the pre-heating, the conveyor (C) conveys the evaporator group (E) directly in partial or total immersion within the melted metal bath (B).

The running continues and the evaporator comes out of the bath.

An air jet not shown will take the metal drops and favour a quick solidification.

At this point the evaporator group is ready to be conveyed to the final assembly for obtaining the refrigerator without further processings, or it will be conveyed to a following varnishing station.

Advantageously as said:
- during the immersion the assembly will be subjected to ultrasonic vibration.

In this way, the surface oxide will flake and will tend to float on the bath favouring the deep adherence of the metallic alloy both on the surface of the evaporator and on the surface of the pipe concerned.

Periodically the slag floating on the bath (B) will be removed by skimming.

As the coupling sleeve-like junction will be vertically placed downwards, the oxide slag will be thrust upwards by the pressure of the melted metal, and will annularly accumulate along the coupling narrowing (6) supplying a natural plug against the danger that the melted metal transude within the delivery and return ducts inside of the evaporator.

In the figure the junction area (13") has been created projecting respect to the lower edge (13), but it is also possible not to have this projecting element 13' and that one part of the evaporator or even the entire evaporator is immerged in order to supply a further protection coating (operation much more expensive but that would supply an evaporator with a higher resistance to corrosion and wear).

The junction area may also be displaced on a corner of the evaporator and this one in such a case will be hung diagonallly tilted, so that protusions will not be necessary and the immerged part can be minimum.

Obviously the pipe may be of aluminium and its alloys or of copper and its alloys. In fact the coating due to the metallic bath involves a passivation of the connection subjected to galvanic corrosion, particularly more dangerous when there are different metals (ie. Aluminium with Copper).

Also the respective branch 4 can be subjected to said bath giving also in it the same sealing by using the same technique of what described above.

In such a case the immersion of Fig.3, shall provide that also the branch portion (4) is immerged, prearranging the pipe alongside the evaporator plate in a different way, or also immerging more the whole evaporator group.

In Figure 7 is shown a convenient variation to the connection, by shaping the return tube (3 and 3') internal to the coupling sleeve (4). This favours the penetration of the melted alloy.

The solution of figure 5 represents the connection of two return tubes 3 and 3' with the outgoing of the capillary tube 5, the whole encapsulated by the glass-like coupling sleeve 4. Thus the return tube 3 is in aluminium and its protrusion 3' is conveniently in copper.

It is any way clear that only one return tube 3 entirely in aluminium can be used, with lateral hole for the outgoing of the capillary tube (5), the whole encapsulated by the glass-like coupling sleeve (4).

Alternatively the coupling sleeve 4 could also be eliminated and obtained by shaping by the widening of the evaporator return tube mouth (3) and by inserting in it the return extension (3'), thus the coupling sleeve (4) would be integral part of the first return tube section (3).

Advantageously to favour the penetration of the melted metal within said collector coupling sleeve, a lateral holing on said collector coupling sleeve may be provided.

In such case this breathing will favour the penetration of the metal, said breathing being able to have such a value that it automatically obstructs at the extraction from said bath by capillarity and following solidification.

The use of the ultrasonic technology for the assembling of the evaporator group, involves, besides a reduction of the number of connecting points, also the possibility to avoid using deoxidizing substances with the consequent certainty of the internal cleanness of the circuit and with a general improvement of the environmental operative conditions.

The project and the geometric preparation of the connection before prearranging the plant, will guarantee repetitiveness.

The realization of an interlocking system made up of a numerical control rototranslator, allows to obtain an in- process indirect control on the steadiness of the characteristics.

Additionally the same ultrasonic welding typology allows to determine priorly the process parameters and ensure with their steadiness the repetition of the result making it independent from the operator's ability.

The geometry of the junction on the panel is predetermined by a tool able to create the suitable seat for receiving the exchanger tube and preventing the possible obstruction of the connection.

The processing steps:

The first phase consists in connecting the pipe end of the freezing circuit within the mouth collector coupling sleeve (whose seat will be pre-calibrated) of the evaporator plate, by inserting the first one inside of a pre-calibrated seat .

The second phase provides the pre-heating of the panel-pipe assembly of the freezing circuit at a temperature 10-15° C higher than the melting point of the welding alloy.

The third phase consists in immerging the pre-heated assembly into a Zinc and Aluminium melted alloy bath.

After some seconds during which the exchanger tube-panel assembly adapts in the alloy, the action of the ultrasounds begins subjecting the whole assembly to molecular vibrations.

The cavitation brought by the ultrasonic excitation of the melted alloy removes the oxides from the submerged metallic surfaces favouring the amalgamation of the melted alloy with the melted metal.

The combination between the main pressure of the liquid alloy caused by the joining of the assembly that is immerged in melted alloy and the ultrasonic vibration makes the alloy penetrate and fill the cavities between the two parts to be joined, pushing the oxide upwards.

Part of the oxides dissipate into the melted alloy, and subsequently will float on surface, from where will be easily removed.

When they are out of the bath a cleaning phase and control may be provided with possible removal of the alloy residues and the following functional test.
the pipe of the freezing circuit can be sealed in the same phase or even in preventive phase as far as concerns the deviation knot 4 with similar technique.

## Claims

1. Evaporator group of the type that uses a roll bond evaporator couple of plates, in aluminium or its alloy (1), and between said plates (1) an evaporator duct (1', 1") is obtained by not bonding of said plates (1), to which it is connected in a corresponding junction area (11, 12, 13"), a freezing circuit piping (3-4-5) with metallic pipe return tube (3), having coaxially a capillary tube (5),
- said freezing circuit piping (3-4-5) having a capillary tube further connection (4) in said return tube (3), to allow said capillary tube (5) to come out from inside said return tube (3),
**characterised in that**:
- both said junction area (11, 12, 13") and capillary tube further connection (4) have a coupling sleeve shape;
- male and/or female portions of said sleeve-coupling junctions are undulated in order to form some grooves in the connection area that allows the penetration of the melted material,
- the entire piping (3,4) with said capillary tube (5) forming said freezing circuit piping (3, 4, 5) and the surface of at least said junction area (1") in said evaporator plate (1), is sealed and covered by a melted metal layer of 95% zinc and 5% aluminium alloy, made adherent by immersion bath;
- the interspace of said junction and connection in a coupling sleeve (3-12, 4) being sealed by penetration of the same melted metal that also coats the external area;
- said junction area is projecting (13') respect to the edge (13) of the said evaporator plate (1).

2. Evaporator group according to the previous claim, **characterised in that** it is entirely sealed and coated by said melted metal bath protection layer of 95% zinc and 5% aluminium alloy.

3. Evaporator group according to the previous claims, **characterised in that** the said freezing circuit pipe (3-3'-4-5), provides the use of only one metallic material such as Aluminium or Aluminium alloy substantially of the same material of said evaporator plate (1).

4. Evaporator group according to the previous claims, **characterised in that** said exchanger circuit pipe (3-3'-4-5) uses only one integral return tube (3-3'), without junctions, using said cup-like coupling sleeve (4) that allows said capillary tube (5) to come out of said return tube (3, 3'), encapsulating it and filled out with said melted metal bath (B).

## Patentansprüche

1. Verdunstungsaggregat mit einem durch Rollen verbundenen Paar Verdunstungsplatten aus Aluminium oder einer Legierung davon (1), wobei zwischen besagten Platten (1) eine Verdunstungsleitung (1', 1") erreicht wird, indem besagte Platten (1) nicht verbunden sind, woran in einer entsprechenden Verbindungsfläche (11, 12, 13") eine Kühlkreislauf-Rohrleitung (3-4-5) mit metallischem Rückflussrohr (3) angeschlossen, das koaxial ein Kapillarrohr (5) aufweist,
- besagte Kühlkreislauf-Rohrleitung (3-4-5) besitzt eine weitere Kapillarrohr-Verbindung (4) in besagtem Rückflussrohr (3), damit besagtes Kapillarrohr (5) aus dem Innern des Rückflussrohrs (3) herauskommt,
**gekennzeichnet dadurch, dass**:
- sowohl besagte Verbindungsfläche (11, 12, 13") als auch die weitere Kapillarrohr-Verbindung (4) eine Kupplungshülsenform aufweisen;
- Aussen- und/oder Hohlteilstücke von besagten Hülsenkupplungen sind wellenförmig, um Rillen in der Verbindungsfläche zu bilden, zum Eindringen des geschmolzenen Materials,
- die ganze Rohrleitung (3,4) mit besagtem Kapillarrohr (5), die die besagte Kühlkreislauf-Rohrleitung (3, 4, 5) bildet, und die Oberfläche mindestens der besagten Verbindungsfläche (1") in besagter Verdunstungsplatte (1) ist abgedichtet und von einer Schicht geschmolzenen Metalls von 95 % Zink und 5 % Aluminiumlegierung bedeckt, haftend gemacht durch ein Tauchbad;
- der Zwischenraum von besagter Verbindung und Verbindung in einer Kupplungshülse (3-12, 4) ist durch Eindringen desselben geschmolzenen Metalls abgedichtet, das die äußere Fläche verkleidet;
- besagte Verbindungsfläche ragt (13') über die Kante (13) der besagten Verdunstungsplatte (1).

2. Verdunstungsaggregat nach dem vorherigen Anspruch, **gekennzeichnet dadurch, dass** es von besagter Schutzschicht aus geschmolzenem Metallbad von 95 % Zink und 5 % Aluminiumlegierung vollständig abgedichtet und überzogen ist.

3. Verdunstungsaggregat nach den vorherigen Ansprüchen, **gekennzeichnet dadurch, dass** das besagte Kühlkreislaufrohr (3-3'-4-5) aus nur einem Metall wie zum Beispiel Aluminium oder Aluminiumlegierung ist, im wesentlichen aus demselben Material wie besagte Verdunstungsplatte (1).

4. Verdunstungsaggregat nach den vorherigen Ansprüchen, **gekennzeichnet dadurch, dass** besagtes Austauschkreislaufrohr (3-3'-4-5) nur ein vollständiges Rückfluss-Austauschkreislaufrohr (3-3) verwendet, ohne Verbindungen, mit besagter schaleähnlichen Kupplungshülse (4), die gestattet, dass besagtes Kapillarrohr (5) aus besagtem Rückflussrohr (3, 3') herauskommt, und es mit besagtem geschmolzenem Metallbad (B) einkapselt und füllt.

## Revendications

1. Groupe d'évaporateur du type qui utilise un couple de plaques d'un évaporateur soudé par laminage, en aluminium ou son alliage (1), et qui obtient entre lesdites plaques (1) un tuyau d'évaporateur (1, 1") sans réaliser la liaison desdites plaques (1), auxquelles est connectée dans une zone de connexion correspondante (11, 12, 13'), une canalisation de congélateur (3-4-5) avec un tube de décharge métallique (3), ayant coaxialement un tube hypodermique (5),
- Ladite canalisation de congélateur (3-4-5) ayant un tube hypodermique pour la connexion postérieure (4) dans ledit tube de décharge (3), afin de permettre que ledit tube hypodermique (5) puisse sortir de l'intérieur dudit tube de décharge (3),
**caractérisé en ce que**:
- Aussi bien ladite zone de connexion (11, 12, 13") que le tube hypodermique, postérieurement à la connexion (4), présentent une forme de manche d'accouplement;
- Les portions mâle et/ou femelle desdites connexions dudit manche accouplement sont ondulées afin de former plusieurs rainures à la zone d e connexion, permettant la pénétration du matériel fondu,
- La totalité de la canalisation (3, 4) avec ledit tube hypodermique (5) formant ladite canalisation de congélateur (3, 4, 5) et la surface d'au moins ladite zone de connexion (1") dans ladite plaque d'évaporateur (1), est scellée et couverte par une couche de métal fondu de 95% de zinc et 5% d'alliage d'aluminium, qui adhère moyennant une immersion au bain-marie;
- L'interface de ladite jonction et connexion dans un manche d'accouplement (3-12, 4) étant scellée moyennant la pénétration du même métal fondu qui également, enduit la zone externe;
- Ladite zone de connexion projettant (13') par rapport à l'extrémité (13) de ladite plaque de l'évaporateur (1).

2. Groupe d'évaporateur selon la revendication antérieure, **caractérisé en ce qu'**il est entièrement scellé et enduit par ladite couche de protection de bain de métal fondu de 95% de zinc et 5% d'alliage d'aluminium.

3. Groupe d'évaporateur selon les revendications antérieures, **caractérisé en ce que** ledit tube de congélateur (3-3'-4-5), pourvoit l'utilisation de seulement un matériel métallique tel que l'aluminium ou l'alliage d'aluminium, substantiellement du même matériel que ladite plaque d'évaporateur (1).

4. Groupe d'évaporateur selon les revendications antérieures, **caractérisé en ce que** ledit tube de circuit d'échangeur (3-3'-4-5) se sert seulement d'un tube de décharge intégral (3-3), sans connexions, utilisant ledit manche d'accouplement en forme de coupe (4) qui permet que ledit tube hypodermique (5) sorte dudit tube de décharge (3, 3), en le scellant et en le remplissant moyennant ledit bain de métal fondu (B).
